# EUROPÄISCHE PATENTSCHRIFT

(11) **EP 3 208 383 B1**
(45) Veröffentlichungstag und Bekanntmachung des Hinweises auf die Patenterteilung: **12.12.2018**
(21) Anmeldenummer: 17151868.1
(22) Anmeldetag: 17.01.2017
(51) Int. Cl.: E01H 1/04

(54) **HANDGEFÜHRTE KEHRMASCHINE**
HAND-CONTROLLED SWEEPING MACHINE
BALAYEUSE MANUELLE

(30) Priorität: 18.02.2016 DE 102016202511
(43) Veröffentlichungstag der Anmeldung: 23.08.2017
(73) Patentinhaber: Haaga Kehrsysteme GmbH, 73230 Kirchheim/Teck (DE)
(72) Erfinder: BRUNTNER, Eugen, 73278 Schlierbach (DE); LINK, Klaus, 73329 Kuchen/Fils (DE)
(74) Vertreter: Patentanwälte Ruff, Wilhelm, Beier, Dauster & Partner mbB

(56) Entgegenhaltungen:
- DE-C1- 19 519 365
- GB-A- 1 369 426
- US-A- 2 263 722
- US-A1- 2005 039 277

## Beschreibung

Die Erfindung betrifft eine handgeführte Kehrmaschine mit einem Gehäuse, mindestens einem Kehrmittel, vorzugsweise mit zwei in einem Frontbereich des Gehäuses nebeneinander angeordnete, gegensinnig nach innen um Drehachsen rotierende Tellerbesen und/oder mit einer quer zu einer Verfahrrichtung angeordneten Kehrwalze, und mit zwei, in der Verfahrrichtung an gegenüberliegenden Seiten des Gehäuses hinter dem Kehrmittel angeordneten Laufrädern.

Handgeführte Kehrmaschinen sind beispielsweise aus DE 196 17 986 A1 bekannt. Sie zeichnen sich durch einen einfachen Aufbau und gute Funktion aus. Sie haben insbesondere beim Aufkehren von grobem Kehrgut und Laub erhebliche Vorteile. Dabei ist in einfachen Ausgestaltungen vorgesehen, dass ein Antrieb der Tellerbesen aus der Verfahrbewegung abgeleitet wird. Hierzu sind vorzugsweise innerhalb der Tellerbesen Laufrollen angeordnet, die die Tellerbesen unabhängig von der Verfahrrichtung jeweils so antreiben, dass sie von außen nach innen kehren. Daneben ist es bekannt, die Tellerbesen mittels zugeordneter Elektromotoren anzutreiben, wobei die Kehrmaschine von einer Bedienperson nur noch geführt werden muss.

Aus DE 195 19 365 C1 ist ein Kombinationsgerät zur Garten-, Landschafts- oder Hofpflege bekannt, das ein Gehäuse mit einer darin angeordneten Kehrwalze und einer darin angeordneten Messerwelle besitzt, wobei die Kehrwalze und die Messerwelle durch Lageveränderung des Gehäuses zum Boden wahlweise in ihre Arbeitsposition gebracht werden können. Zu diesem Zweck ist an einem Heck des Gehäuses ein Schaltrad vorgesehen, das zwischen einer ersten Gebrauchsstellung und einer zweiten Gebrauchsstellung verschwenkbar ist, wobei das Schaltrad im Gebrauch in der ersten oder der zweiten Gebrauchsstellung arretiert wird.

Das Dokument US 2 263 722 A beschreibt eine handgeführte Kehrmaschine mit zwei Antriebsrädern, einer hinter den Antriebsrädern angeordneten Lenkrolle und einer vor den Antriebsrädern angeordneten Kehrwalze. Eine die Antriebsräder und die Lenkrolle aufweisende Rahmeneinheit ist dabei gegenüber einer die Kehrwalze aufweisenden Rahmeneinheit um eine parallel zu den Drehachsen der Antriebsräder und der Laufrolle angeordnete Achse verschenkbar.

Der Erfindung liegt die Aufgabe zugrunde, eine Kehrmaschine mit einer verbesserten Handhabbarkeit zu schaffen.

Diese Aufgabe wird gelöst durch eine handgeführte Kehrmaschine mit einem Gehäuse, mit mindestens einem Kehrmittel und mit zwei, in Verfahrrichtung an gegenüberliegenden Seiten des Gehäuses hinter dem mindestens einen Kehrmittel angeordneten Laufrädern, wobei in Verfahrrichtung hinter den Laufrädern an dem Gehäuse mindestens eine Stützrolle umfassend eine Gabel und ein an der Gabel um eine Drehachse drehbares Stützrad vorgesehen ist, wobei die Gabel um eine parallel zur Drehachse angeordnete Schwenkachse verschwenkbar an dem Gehäuse angebracht ist und im Gebrauch verschwenkbar verbleibt, sodass die Stützrolle im Gebrauch aus einer Gebrauchsstellung in eine Kippstellung verschwenkbar ist, wobei in der Kippstellung ein Abstand der Drehachse des Stützrads von einer Drehachse der Laufräder in vertikaler Richtung kleiner als in der Gebrauchsstellung, und wobei ein Rückstellelementvorgesehen ist, welches die mindestens eine Stützrolle in die Gebrauchsstellung zwingt.

Als Verfahrrichtung wird eine Richtung bezeichnet, in welcher die Kehrmaschine bei einer Benutzung überwiegend bewegt wird. Selbstverständlich ist es jedoch bei einer üblichen Gestaltung der Kehrmaschine auch möglich, diese zumindest kurzfristig entgegen der Verfahrrichtung rückwärts zu bewegen.

Als "im Gebrauch verschwenkbar" wird im Zusammenhang mit der Anmeldung eine Anbringung bezeichnet, bei welcher im Gebrauch die Stützrolle nicht durch Rastmittel oder dergleichen in einer Position fixiert ist.

Üblicherweise ist in einem Heckbereich des Gehäuses der Kehrmaschine ein Schmutzsammelbehälter vorgesehen, in welchem ein Kehrgut gesammelt wird. Das Stützrad verhindert ein ungewünscht weites Absinken eines Heckbereichs des Gehäuses auch bei einem weit über die Laufräder hinausragenden Heckbereich, einem nach hinten ragenden Schiebebegriff mit einem hohen Gewicht und/oder bei einem mit schwerem Kehrgut befüllten Sammelbehälter. Durch die im Gebrauch schwenkbare Anbringung wird im Gegensatz zu der beispielsweise aus DE 195 19 365 C1 bekannten Gestaltung mit einem im Gebrauch in einer fixierten Position angeordneten Rad eine Überbestimmtheit der Kehrmaschine vermieden, sodass auch ein Überfahren eines unebenen Untergrunds möglich ist. Das Gehäuse umfasst in vorteilhaften Ausgestaltungen ein als Schmutzsammelbehälter dienendes Gehäuseteil und mindestens ein zweites Gehäuseteil, wobei der Schmutzsammelbehälter von dem zweiten Gehäuseteil zum Entleeren trennbar ist.

Sofern mehrere Stützrollen vorgesehen sind, werden diese je nach Ausgestaltung gemeinsam oder getrennt verschwenkt.

Da in der Kippstellung ein Abstand der Drehachse des Stützrads von einer Drehachse der Laufräder in vertikaler Richtung kleiner ist als in der Gebrauchsstellung. ist es möglich, einen Heckbereich des Gehäuses durch Verschwenken des Gehäuses um die Drehachse der Laufräder und unter Verschwenken der Stützrolle abzusenken. Die im Frontbereich angeordneten Kehrmittel werden dabei angehoben. Dies erlaubt beispielsweise ein Überfahren von Hindernissen, bei welchen ein Kontakt mit den Kehrmitteln unerwünscht ist. Dank der Stützrolle ist dabei ein einfaches Verfahren möglich, wobei die Kippstellung vorzugsweise derart gewählt ist, dass ein Bodenkontakt des Gehäuses auch in der Kippstellung sicher verhindert ist.

Ein Schwenkbereich der Stützrolle ist vorzugsweise auf einen durch den Fachmann je nach Anwendungsfall festgelegten Bereich begrenzt. Hierfür ist in vorteilhaften Ausgestaltungen mindestens ein Anschlag vorgesehen, welcher mit der Gabel zur Begrenzung der Schwenkbewegung zusammenwirkt.

In einer vorteilhaften Ausgestaltung ist die mindestens eine Stützrolle aus der Gebrauchsstellung in Bezug auf die Verfahrrichtung nach hinten in die Kippstellung verschwenkbar. Vorzugsweise ist dabei ein Verschwenken der mindestens einen Stützrolle aus der Gebrauchsstellung in Bezug auf die Verfahrrichtung nach vorne mittels eines Anschlags gesperrt. Die Gebrauchsstellung ist in vorteilhaften Ausgestaltungen derart gewählt, dass ein Abstand der Drehachse des Stützrads von der Drehachse der Laufräder in vertikaler Richtung in der Gebrauchsstellung maximal ist, sodass der Heckbereich beim Verschwenken in die Kippstellung über den gesamten Weg abgesenkt wird.

Die mindestens eine Stützrolle ist in einer Ausgestaltung an einer an einer Unterseite des Gehäuses angebrachten Welle befestigt. In vorteilhaften Ausgestaltungen ist die mindestens eine Stützrolle in einer Ausnehmung an der Unterseite des Gehäuses derart angebracht, dass das Stützrad in der Gebrauchsstellung von der Unterseite abragt. Die Dimensionierung der Stützrolle und deren Montageposition sind an die Gestaltung der Kehrmaschine angepasst.

In einer vorteilhaften Ausgestaltung ist die Ausnehmung in Richtung einer Rückwand des Gehäuses offen und das Stützrad ist in der Kippstellung in Verfahrrichtung hinter der Rückwand angeordnet. Dadurch wird ein Absenken des Heckbereichs über eine lange Strecke beim Verschwenken des Gehäuses um die Drehachse der Laufräder möglich.

In einer Ausgestaltung ist eine Unterseite des Gehäuses im Wesentlichen parallel zu einem ebenen Untergrund, wenn sich die Stützrolle in der Gebrauchsstellung befindet. In vorteilhaften Ausgestaltungen weist das Gehäuse der Kehrmaschine an seiner Unterseite eine Schräge auf, sodass ein Abstand der Unterseite des Gehäuses von einem Untergrund mit dem Abstand zu den Laufrädern zunimmt. Dadurch wird ebenfalls ein Absenken des Heckbereichs über eine lange Strecke beim Verschwenken des Gehäuses um die Drehachse der Laufräder ermöglicht.

Die Kehrmaschine weist als Kehrmittel vorzugsweise zwei in einem Frontbereich des Gehäuses nebeneinander angeordnete, gegensinnig nach innen um Drehachsen rotierende Tellerbesen auf. Alternativ oder zusätzlich ist in einer weiteren Ausgestaltung eine quer zu der Verfahrrichtung angeordnete Kehrwalze vorgesehen. Dabei ist in einfachen Ausgestaltungen vorgesehen, dass ein Antrieb der Tellerbesen aus der Verfahrbewegung abgeleitet wird. Alternativ oder zusätzlich ist in anderen Ausgestaltungen vorgesehen, die Tellerbesen mittels zugeordneter Elektromotoren anzutreiben, wobei die Kehrmaschine von einer Bedienperson nur noch geführt werden muss.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: eine handgeführte Kehrmaschine in einer Seitenansicht;
- Fig. 2: die handgeführte Kehrmaschine gemäß Fig. 1 in einer Seitenansicht, wobei ein Gehäuse um eine Drehachse von Laufrädern verkippt ist;
- Fig. 3: einen Heckbereich des Gehäuses der Kehrmaschine gemäß Fig. 1 in einer perspektivischen Darstellung von unten;
- Fig. 4: eine Stützrolle der Kehrmaschine gemäß Fig. 1 in einer Gebrauchsstellung und
- Fig. 5: die Stützrolle gemäß Fig. 4 in der Gebrauchsstellung und in einer Kippstellung.

### DETAILLIERTE BESCHREIBUNG DER AUSFÜHRUNGSBEISPIELE

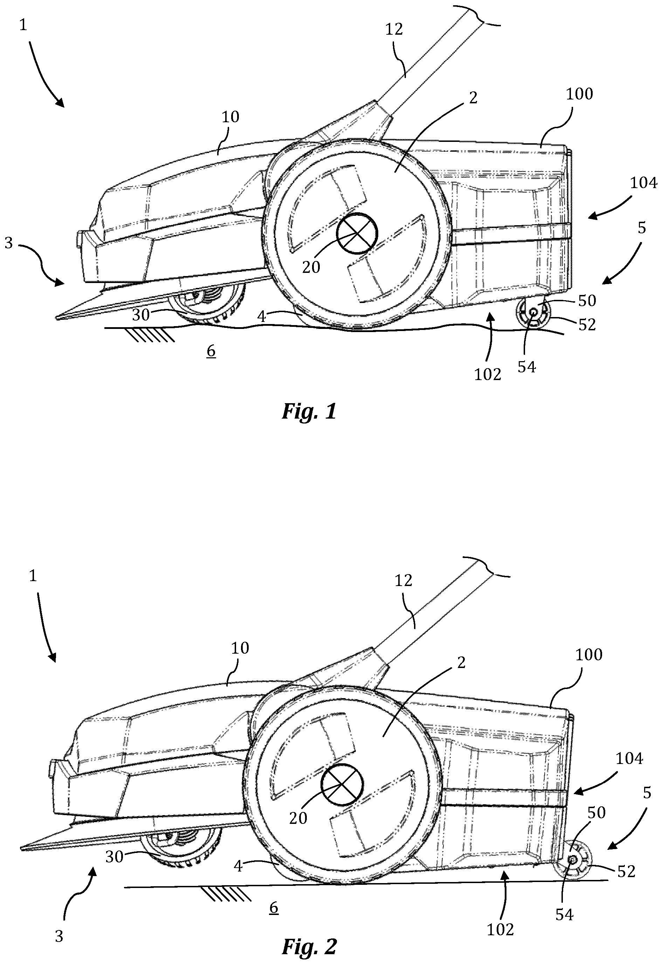

Fig. 1 und 2 zeigen schematisch eine handgeführte Kehrmaschine 1 in einer Seitenansicht. Die dargestellte Kehrmaschine 1 besitzt ein Gehäuse 10 mit einem Sammelbehälter 100 und zwei an gegenüberliegenden Seiten des Gehäuses 10 angeordnete Laufräder 2, von welchen in Fig. 1 nur eines sichtbar ist. Für ein Verschieben der Kehrmaschine ist ein Schiebegriff 12 vorgesehen.

Die dargestellte Kehrmaschine 1 umfasst als Kehrmittel zwei, in einem Frontbereich des Gehäuses 10 angebracht Tellerbesen 3, von denen in Fig. 1 ebenfalls nur einer sichtbar ist, sowie eine Kehrwalze 4.

Die Kehrmaschine 1 umfasst weiter eine Stützrolle 5, welche in Verfahrrichtung der Kehrmaschine 1 hinter den Laufrädern 2 angeordnet ist. In dem dargestellten Ausführungsbeispiel ist eine Stützrolle 5 vorgesehen, welche quer zur Verfahrrichtung mittig an dem Gehäuse 10 angeordnet ist.

Die zwei Tellerbesen 3 rotieren mit entgegengesetzter Drehrichtung nach innen um schräg nach vorne geneigte Drehachsen. Ein Neigungswinkel der Drehachse der Tellerbesen 3 gegenüber der Vertikalen beträgt in vorteilhaften Ausgestaltungen ca. 5° bis ca. 15°, sodass Borsten der Tellerbesen 3 etwa mit dem vorderen Drittel des Umfangs der Tellerbesen 3 auf dem zu kehrenden Boden aufliegen.

Ein Antrieb der Tellerbesen 3 ist in der dargestellten Ausgestaltung von einer Bewegung der Kehrmaschine 1 abgeleitet. Hierzu ist den Tellerbesen 3 jeweils ein Antriebsrad 30 zugeordnet. Zudem kann ein Antriebsmotor, insbesondere Elektromotor, vorgesehen sein. Ein Antrieb der Kehrwalze 4 wird ebenfalls von einer Bewegung der Kehrmaschine 1 abgeleitet und/oder erfolgt mittels eines Antriebsmotors, insbesondere eines Elektromotors. Dabei sind Vorkehrungen getroffen, um zu verhindern, dass bei einer Umkehr der Verfahrrichtung der Kehrmaschine 1 die Tellerbesen 3 und/oder Kehrwalze 4 in einer abweichenden Richtung rotieren.

Die Tellerbesen 3 kehren ein Kehrgut über eine nicht sichtbare, schräg nach innen ansteigende Kehrplatte in das Innere des Gehäuses 10, genauer in den als Sammelbehälter 100 dienenden hinteren Bereich des Gehäuses 10.

In der normalen Verfahrrichtung oder Laufrichtung der Kehrmaschine 1 folgt in dem dargestellten Ausführungsbeispiel den Tellerbesen 3 und der Kehrplatte die Kehrwalze 4 nach, die den zu kehrenden Boden mit Kehrwirkung überstreicht. Die Kehrwalze 4 hat mehrere Funktionen. Zum einen übernimmt die Kehrwalze 4 das von den Tellerbesen 3 über die Kehrplatte herangeförderte Kehrgut, beschleunigt dieses und wirft es in Richtung des Sammelbehälters 100. Zum anderen kehrt die Kehrwalze 4 den zu kehrenden Boden in dem mittleren Bereich der Kehrmaschine 1, d. h. in dem Bereich zwischen den Tellerbesen 3. Die Kehrwalze 4 nimmt insbesondere feines Kehrgut auf, das von den Tellerbesen 3 zu dem mittleren Bereich der Kehrmaschine 1 gekehrt wurde und nicht bereits über die Kehrplatte mitgenommen wurde. Die Kehrwalze 4 schleudert diesen Teil des Kehrgutes ebenfalls nach hinten in den als Sammelbehälter 100 dienenden Teil des Gehäuses 10. Die Kehrwalze 4 ist optional. In anderen Ausgestaltungen ist keine Kehrwalze vorgesehen. Ebenso sind Ausgestaltungen ohne Tellerbesen 3 denkbar.

Mittels der Stützrolle 5 wird auch bei einem hohen Füllstand des Sammelbehälters 10 und/oder einem schweren Kehrgut ein Absinken des Heckbereichs des Gehäuses 10 in Richtung Untergrund 6 verhindert.

Die Stützrolle 5 umfasst eine Gabel 50 und ein um eine Drehachse 54 drehbar an der Gabel 50 gelagertes Stützrad 52. Die Gabel 50 ist um eine parallel zu der Drehachse 54 angeordnete Schwenkachse verschwenkbar an dem Gehäuse 10 angelenkt, sodass die Stützrolle 5 bei Überfahren eines unebenen Untergrunds 6 ausweichen kann und eine Überbestimmtheit des Systems vermieden wird.

In dem dargestellten Ausführungsbeispiel ist die Stützrolle 5 aus einer in Fig. 1 dargestellten Gebrauchsstellung in eine in Fig. 2 dargestellte Kippstellung verschwenkbar. In der Kippstellung ist ein Abstand der Drehachse 54 des Stützrads 52 von einer Drehachse 20 der Laufräder 2 in vertikaler Richtung kleiner als in der Gebrauchsstellung, sodass ein Heckbereich des Gehäuses 10 durch Verschwenken des Gehäuses 10 um die Drehachse 20 der Laufräder 2 wie in Fig. 2 dargestellt abgesenkt werden kann. Ein derartiges Absenken ist beispielsweise durch Krafteinleitung an dem Schiebegriff 12 möglich. Durch Absenken des Heckbereichs des Gehäuses 10 wird der Frontbereich mit den Kehrmitteln 3, 4 angehoben, sodass die Kehrmittel 3, 4 nicht über den Untergrund 6 streichen. Die Stützrolle 5 ist in dem dargestellten Ausführungsbeispiel derart angeordnet, dass auch bei einem Absenken des Heckbereichs ein Kontakt der Unterseite 102 des Gehäuses 10 mit dem Untergrund 6 verhindert ist. In dem dargestellten Ausführungsbeispiel weist der Heckbereich an der Unterseite 102 eine Schräge auf. Die Schräge ist vorteilhaft um ein Absenken über eine lange Strecke zu erlauben und um auch bei Überfahren eines stark unebenen Untergrunds einen Kontakt des Gehäuses 10 mit dem Untergrund zu verhindern.

In dem dargestellten Ausführungsbeispiel ragt die Gabel 50 in der in Fig. 1 dargestellten Gebrauchsstellung von einer Unterseite 102 des Gehäuses 10 zumindest im Wesentlichen in vertikaler Richtung ab. In der in Fig. 2 dargestellten Kippstellung ist das Stützrad 52 in einen Bereich hinter einer Rückwand 104 des Gehäuses 10 verschwenkt. Das Gehäuse 10 weist zu diesem Zweck an der Unterseite eine in Richtung der Rückwand 104 offene Aussparung auf.

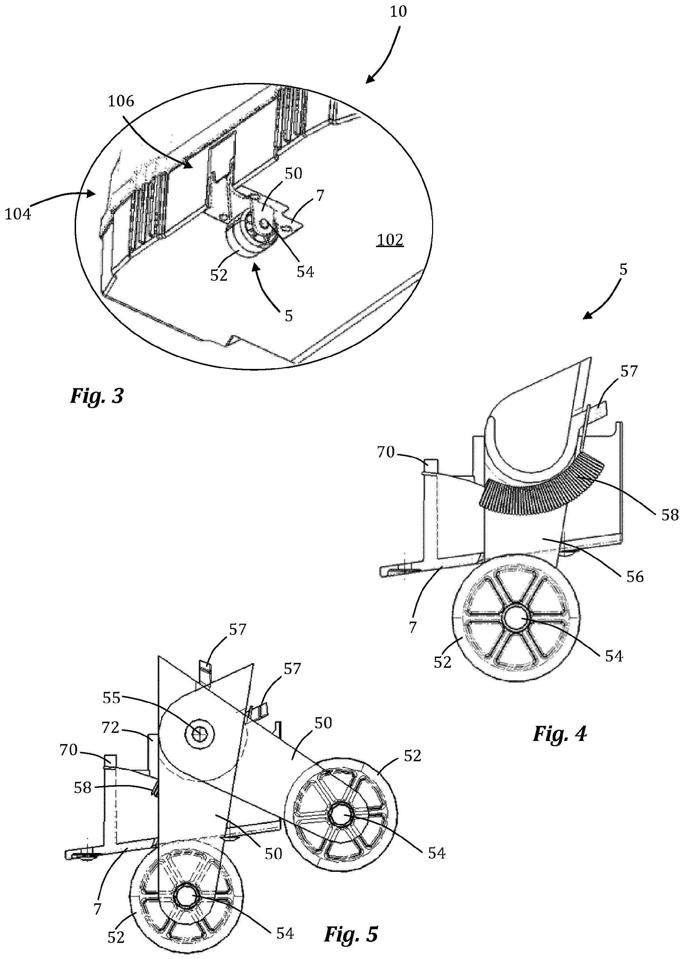

Fig. 3 zeigt in einer perspektivischen Darstellung von unten einen Heckbereich des Gehäuses 10 einer Kehrmaschine gemäß den Fig. 1 und 2 mit einer Stützrolle 5. Wie oben beschrieben, ist in dem dargestellten Ausführungsbeispiel eine Stützrolle 5 vorgesehen, welche zumindest im Wesentlichen mittig in einer Ebene senkrecht zur Verfahrrichtung an dem Gehäuse 10 angebracht ist. Hierfür weist das Gehäuse 10 an der Unterseite 102 eine in Richtung der Rückwand offene Aussparung 106 auf, in welcher die Stützrolle 5 mittels einer Abdeckung 7 verschwenkbar gelagert ist. Wie in Fig. 3 erkennbar, ist das Stützrad 52 in dem dargestellten Ausführungsbeispiel als Doppelrad gestaltet.

Fig. 4 und 5 zeigen die Stützrolle 5 mit der Abdeckung 7 in Alleinstellung, wobei zur besseren Darstellung in Fig. 4 nur ein Gabelarm 56 der Gabel 50 dargestellt ist und in Fig. 5 die Stützrolle in der Gebrauchsstellung und in der Kippstellung dargestellt ist.

Wie in Fig. 4 erkennbar, umfasst die dargestellte Stützrolle 5 eine Feder 58, welche die Stützrolle 5 in die Gebrauchsstellung zwingt. Die Feder 58 ist in dem dargestellten Ausführungsbeispiel zwischen einem an der Abdeckung 7 vorgesehenen Zapfen 70 und eine Zapfen 57 an dem Gabelarm 56 gespannt, wobei die Zapfen 57, 70 in Laufrichtung betrachtet an gegenüberliegenden Seiten des Gabelarms 56 angeordnet sind.

Wie in Fig. 5 erkennbar, ist die Gabel 50 mit dem daran angebrachten Stützrad 52 entgegen der Rückstellkraft der Feder 58 um die Schwenkachse 55 aus der Gebrauchsstellung in die Kippstellung verschwenkbar. In dem dargestellten Ausführungsbeispiel ist an der Abdeckung 7 eine Wand 72 vorgesehen, welche sowohl in der Gebrauchsstellung als auch in der Kippstellung als Anschlag für die Gabel 50 dient. Dadurch wird ein Verschwenken der Stützrolle 5 aus der Gebrauchsstellung in Richtung des Frontbereichs der Kehrmaschine 1 und/oder ein Verschwenken über die Kippstellung hinaus sicher verhindert.

## Patentansprüche

1. Handgeführte Kehrmaschine mit einem Gehäuse (10), mit mindestens einem Kehrmittel (3, 4) und mit zwei, in Verfahrrichtung an gegenüberliegenden Seiten des Gehäuses (10) hinter dem mindestens einen Kehrmittel (3, 4) angeordneten Laufrädern (2), wobei in Verfahrrichtung hinter den Laufrädern (2) an dem Gehäuse (10) mindestens eine Stützrolle (5) umfassend eine Gabel (50) und ein an der Gabel (50) um eine Drehachse (54) drehbares Stützrad (52) vorgesehen ist, **dadurch gekennzeichnet, dass** die Gabel (50) um eine parallel zur Drehachse (54) angeordnete Schwenkachse (55) verschwenkbar an dem Gehäuse (10) angebracht ist und im Gebrauch verschwenkbar verbleibt, sodass die Stützrolle (5) im Gebrauch aus einer Gebrauchsstellung in eine Kippstellung verschwenkbar ist, wobei in der Kippstellung ein Abstand der Drehachse (54) des Stützrads (52) von einer Drehachse (20) der Laufräder (2) in vertikaler Richtung kleiner als in der Gebrauchsstellung ist und wobei ein Rückstellelement vorgesehen ist, welches die mindestens eine Stützrolle (5) in die Gebrauchsstellung zwingt.

2. Handgeführte Kehrmaschine nach Anspruch 1, **dadurch gekennzeichnet, dass** ein maximaler Schwenkbereich der mindestens einen Stützrolle (5) mittels mindestens eines Anschlags (72) begrenzt ist.

3. Handgeführte Kehrmaschine nach Anspruch 1 oder 2, **dadurch gekennzeichnet, dass** die mindestens eine Stützrolle (5) aus der Gebrauchsstellung in Bezug auf die Verfahrrichtung nach hinten in die Kippstellung verschwenkbar ist.

4. Handgeführte Kehrmaschine nach Anspruch 3, **dadurch gekennzeichnet, dass** ein Verschwenken der mindestens einen Stützrolle (5) aus der Gebrauchsstellung in Bezug auf die Verfahrrichtung nach vorne mittels eines Anschlags gesperrt ist.

5. Handgeführte Kehrmaschine nach einem der Ansprüche 1 bis 4, **dadurch gekennzeichnet, dass** das Rückstellelement als Federelement (58) ausgebildet ist.

6. Handgeführte Kehrmaschine nach einem der Ansprüche 1 bis 5, **dadurch gekennzeichnet, dass** die mindestens eine Stützrolle (5) in einer Ausnehmung (106) an einer Unterseite des Gehäuses (10) derart angebracht ist, dass das Stützrad (52) in der Gebrauchsstellung von der Unterseite (102) abragt.

7. Handgeführte Kehrmaschine nach Anspruch 6, **dadurch gekennzeichnet, dass** die Ausnehmung (106) in Richtung einer Rückwand (104) des Gehäuses (10) offen ist und das Stützrad (52) in der Kippstellung in Verfahrrichtung hinter der Rückwand (104) angeordnet ist.

8. Handgeführte Kehrmaschine nach einem der Ansprüche 1 bis 7, **dadurch gekennzeichnet, dass** das Gehäuse (10) der Kehrmaschine (1) an seiner Unterseite (102) eine Schräge aufweist, sodass ein Abstand der Unterseite (102) des Gehäuses (10) von einem Untergrund (6) mit dem Abstand zu den Laufrädern (2) zunimmt.

9. Handgeführte Kehrmaschine nach einem der Ansprüche 1 bis 8, **dadurch gekennzeichnet, dass** die Kehrmittel zwei in einem Frontbereich des Gehäuses nebeneinander angeordnete, gegensinnig nach innen um Drehachsen rotierende Tellerbesen (3) und/oder eine quer zu der Verfahrrichtung angeordneten Kehrwalze (4) umfassen.

## Claims

1. Hand-controlled sweeping machine having a housing (10), having at least one sweeping means (3, 4) and having two runner wheels (2) disposed, in the advancement direction, on opposite sides of the housing (10) behind the at least one sweeping means (3, 4), wherein, in the advancement direction, behind the runner wheels (2) on the housing (10) is provided at least one supporting roller (5) comprising a fork (50) and a supporting wheel (52) rotatable about a rotational axis (54) on the fork (50), **characterized in that** the fork (50) is mounted on the housing (10) to be pivotable about a pivot axis (55) disposed in parallel to the rotational axis (54) and remains pivotable during use such that the supporting roller (5) during use is pivotable from a use position to a tilted position, wherein in the tilted position a distance of the rotational axis (54) of the supporting wheel (52) to a rotational axis (20) of the runner wheels (2) in the vertical direction is smaller than in the use position, and wherein a return member is provided, which forces the at least one supporting roller (5) to the use position.

2. Hand-controlled sweeping machine according to claim 1, **characterized in that** a maximum pivoting range of the at least one supporting roller (5) is limited by means of at least one end stop (72).

3. Hand-controlled sweeping machine according to claim 1 or 2, **characterized in that** the at least one supporting roller (5) is pivotable from the use position in relation to the advancement direction rearwards to the tilted position.

4. Hand-controlled sweeping machine according to claim 3, **characterized in that** pivoting of the at least one supporting roller (5) from the use position in relation to the advancement direction forwards is blocked by means of an end stop.

5. Hand-controlled sweeping machine according to any of claims 1 to 4, **characterized in that** the return member is embodied in a spring element (58).

6. Hand-controlled sweeping machine according to any of claims 1 to 5, **characterized in that** the at least one supporting roller (5) is attached in a recess (106) on a bottom side of the housing (10) in such a manner that the supporting wheel (52) in the use position projects from the bottom side (102).

7. Hand-controlled sweeping machine according to claim 6, **characterized in that** the recess (106) is open in the direction of a rear wall (104) of the housing (10) and the supporting wheel (52) in the tilted position is disposed in the advancement direction behind the rear wall (104).

8. Hand-controlled sweeping machine according to any of claims 1 to 7, **characterized in that** the housing (10) of the sweeping machine (1) has a bevel on the bottom side (102) thereof such that a distance of the bottom side (102) of the housing (10) to a ground (6) increases with the distance to the runner wheels (2).

9. Hand-controlled sweeping machine according to any of claims 1 to 8, **characterized in that** the sweeping means comprise two disc brooms (3) disposed side by side in a front region of the housing and rotating about rotational axes inwards in opposite directions and/or one sweeping roller (4) disposed transversely to the advancement direction.

## Revendications

1. Balayeuse manuelle comprenant un carter (10), au moins un moyen de balayage (3, 4) et au moins deux roues mobiles (2) disposées sur des côtés opposés du carter (10) derrière ledit au moins un moyen de balayage (3, 4) dans le sens de déplacement, au moins un rouleau d'appui (5) comportant une fourche (50) et une roue d'appui (52) pouvant tourner autour d'un axe de rotation (54) sur la fourche (50) étant prévu sur le carter (10) derrière les roues mobiles (2) dans le sens de déplacement, **caractérisée en ce que** la fourche (50) est montée sur le carter (10) de manière à pouvoir pivoter autour d'un axe de pivotement (55) disposé parallèlement à l'axe de rotation (54) et demeure pivotante lors de l'utilisation, de telle sorte que le rouleau d'appui (5) peut pivoter, lors de l'utilisation, d'une position d'utilisation à une position de basculement, une distance de l'axe de rotation (54) de la roue d'appui (52) à un axe de rotation (20) des roues mobiles (2) dans la direction verticale étant plus petite dans la position de basculement que dans la position d'utilisation, et un élément de rappel étant prévu, lequel force ledit au moins un rouleau d'appui (5) à adopter la position d'utilisation.

2. Balayeuse manuelle selon la revendication 1, **caractérisée en ce qu'**une plage de pivotement maximale dudit au moins un rouleau d'appui (5) est limitée au moyen d'au moins une butée (72).

3. Balayeuse manuelle selon la revendication 1 ou 2, **caractérisée en ce que** ledit au moins un rouleau d'appui (5) peut être pivoté à partir de la position d'utilisation, vers l'arrière par rapport au sens de déplacement, jusqu'à la position de basculement.

4. Balayeuse manuelle selon la revendication 3, **caractérisée en ce qu'**un pivotement dudit au moins un rouleau d'appui (5) à partir de la position d'utilisation, vers l'avant par rapport au sens de déplacement, est bloqué au moyen d'une butée.

5. Balayeuse manuelle selon l'une quelconque des revendications 1 à 4, **caractérisée en ce que** l'élément de rappel est réalisé sous forme d'élément ressort (58).

6. Balayeuse manuelle selon l'une quelconque des revendications 1 à 5, **caractérisée en ce que** ledit au moins un rouleau d'appui (5) est monté dans un évidement (106) sur un côté inférieur du carter (10) de telle sorte que la roue d'appui (52) fasse saillie à partir du côté inférieur (102) dans la position d'utilisation.

7. Balayeuse manuelle selon la revendication 6, **caractérisée en ce que** l'évidement (106) est ouvert en direction d'une paroi arrière (104) du carter (10) et la roue d'appui (52) est, dans la position de basculement, disposée derrière la paroi arrière (104) dans le sens de déplacement.

8. Balayeuse manuelle selon l'une quelconque des revendications 1 à 7, **caractérisée en ce que** le carter (10) de la balayeuse (1) présente une inclinaison au niveau de son côté inférieur (102), de telle sorte qu'une distance du côté inférieur (102) du carter (10) à une surface sous-jacente (6) augmente au fur et à mesure que la distance aux roues mobiles (2) augmente.

9. Balayeuse manuelle selon l'une quelconque des revendications 1 à 8, **caractérisée en ce que** les moyens de balayage sont deux balais circulaires (3) juxtaposés dans une zone avant du carter et tournant en sens inverses vers l'intérieur autour d'axes de rotation et/ou un rouleau de balayage (4) disposé transversalement au sens de déplacement.
